## Europäisches Patentamt
## European Patent Office
## Office européen des brevets

(19)

(11) Veröffentlichungsnummer: **0 071 026**

**A1**

(12) **EUROPÄISCHE PATENTANMELDUNG**

(21) Anmeldenummer: **82105690.0**

(22) Anmeldetag: **26.06.82**

(51) Int. Cl.³: **F 16 C 27/06**
**B 21 D 53/10**

(30) Priorität: **29.07.81 DE 8122258 U**

(43) Veröffentlichungstag der Anmeldung:
**09.02.83 Patentblatt 83/6**

(84) Benannte Vertragsstaaten:
**CH DE FR GB IT LI SE**

(71) Anmelder: **Hoesch Werke Aktiengesellschaft**
**Eberhardstrasse 12**
**D-4600 Dortmund(DE)**

(72) Erfinder: **Wolzenburg, Heinrich**
**Saarlandstrasse 16**
**D-4600 Dortmund 1(DE)**

(54) **Wälzlager mit Dämpfungsmaterial.**

(57) Ohne wesentliche Erhöhung der Baugröße eines Wälzlagers mit Dämpfungsmaterial wird bei einem Drahtwälzlager das Dämpfungsmaterial (9) mindestens zwischen einem Laufdraht (4, 5, 6) und einem Lagerring (2) in einem vergrößerten Laufdrahtbett (8) des Lagerringes angeordnet.

EP 0 071 026 A1

Croydon Printing Company Ltd.

Estel Hoesch Werke Aktiengesellschaft,
Eberhardstraße 12, 4600 Dortmund 1

## Wälzlager mit Dämpfungsmaterial

Die Erfindung betrifft ein Wälzlager, bei dem ein Lagerring
mit Dämpfungsmaterial versehen ist.

Derartige Wälzlager mit Dämpfungsmaterial werden für Lager
eingesetzt, wenn es darum geht, stoßartige Belastungen zu
reduzieren, um das Lager zu schonen oder Schwingungen
eines Anschlußteils einer Drehverbindung gegenüber der
durch diese verbundenen anderen Anschlußteile zu reduzieren.

Nach dem DE-GM 1 802 000 ist es bekannt, daß im Außen- oder
Innenring oder in beiden ein Raum frei gelassen wird, der mit
einer mehr oder weniger elastischen Masse ausgefüllt wird,
um den oben genannten Zweck zu erreichen. Nachteilig ist bei
dieser Ausbildungsform jedoch, daß der gedämpfte Ring aus
Festigkeitsgründen nahezu die doppelte Baugröße haben muß,
wie dieses bei einem ungedämpften Lager nötig wäre.

Der Erfindung liegt die Aufgabe zugrunde, ein Wälzlager mit
Dämpfungsmaterial zu schaffen, ohne die Baugröße des Wälzlagers
wesentlich zu erhöhen.

Diese Aufgabe wird erfindungsgemäß dadurch gelöst, daß bei
einem Drahtwälzlager das Dämpfungsmaterial mindestens zwischen
einem Laufdraht und einem Lagerring in einem vergrößerten
Laufdrahtbett des Lagerringes angeordnet ist.

In weiterer Ausgestaltung ist vorgesehen, daß über den Querschnitt gesehen das Laufdrahtbett unterschiedlich vergrößert
und das Dämpfungsmaterial unterschiedlich dick ist. Weiterhin
kann erfindungsgemäß das Dämpfungsmaterial nur abschnittsweise
im Querschnitt und/oder am Umfang angeordnet sein.

BAD ORIGINAL

0071026

Die mit der Erfindung erzielten Vorteile bestehen insbesondere
darin, daß trotz einer Dämpfung, die durch das Wälzlager
erzielt wird, dieses nahezu in gleicher Baugröße hergestellt werden kann. Dadurch wird außerdem Fertigungsmaterial
gespart. Gegenüber einem ungedämpften Drahtwälzlager benötigt
das gedämpfte Drahtwälzlager nach der Erfindung keine zusätzliche Bearbeitung. Die Bearbeitung der Drahteinbettung
wird sogar dadurch vereinfacht, als Bearbeitungsungenauigkeiten
durch die Zwischenschaltung des nachgiebigen Dämpfungsmaterials ausgeglichen werden.

Durch die besondere Ausbildung mit über dem Querschnitt unterschiedlich stark eingesetztem Dämpfungsmaterial ist es möglich,
die Dämpfung und damit die Einfederung des Wälzlagers in
verschiedenen Richtungen unterschiedlich zu gestalten. Durch
das abschnittsweise ohne zwischenliegendes Dämpfungsmaterial
in vorgegebenem Abstand Zueinanderanordnen von Laufdraht und
Lagerring ist es möglich, eine Begrenzung der Einfederung
zwischen Lagerring und Laufdraht zu erreichen, wenn der vorgegebene Abstand durch die Einfederung erreicht ist. Diese Maßnahme kann abschnittsweise sowohl im Querschnitt als auch im
Umfang erfolgen.

Mit dem Wälzlager nach der Erfindung ergibt sich durch die
Zwischenschaltung einer elastischen Bettung zwischen Laufdraht und Lagerring ein weiterer überraschender Vorteil.
Bekannterweise weisen Drahtwälzlager der Doppelschrägrollenbauart durch die Möglichkeit des Drehens der halbrunden
Drahtrücken im Drahtbett trotz großer Unrundheiten und Unplanheiten der Anschlußkonstruktion nur geringe Drehwiderstände bei geringem Lagerspiel auf. Bei Wälzlagern nach der
Erfindung wird diese positive Eigenschaft dadurch verstärkt, daß jetzt kein Verschleiß mehr zwischen Laufdraht und Lagerring entsteht. Vielmehr wird die Drehbewegung in Walkarbeit und/oder durch Reibungsarbeit im/am Dämpfungsmaterial umgesetzt und wirkt damit zusätzlich dämpfend auf die Lagereinheit ein.

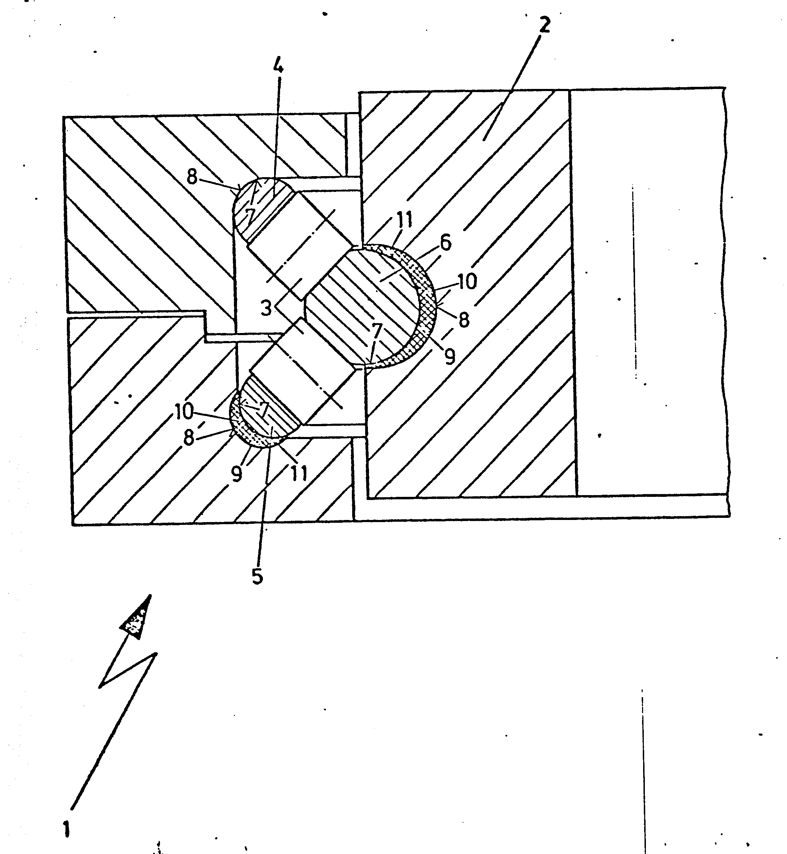

Ein Ausführungsbeispiel der Erfindung wird anhand der Zeichnung, die einen Halbschnitt durch ein Wälzlager mit zwei unterlegten Laufdrähten darstellt, näher beschrieben.

Zwischen dem geteilten äußeren Lagerring 1 und dem ungeteilten inneren Lagerring 2 sind die Wälzkörper und Laufbahnelemente angeordnet. Im Ausführungsbeispiel handelt es sich um ein Doppelschrägrollendrahtwälzlager bestehend aus Laufrollen 3 und Laufdrähten 4, 5, 6. Nach der Erfindung ist der Laufdrahtrücken 7 der Laufdrähte 5, 6 mit Abstand zum Drahtbett ·8 des zugehörigen Lagerringes 1, 2 angeordnet. Der Abstand ist mit Dämpfungsmaterial 9 ausgefüllt. Dabei kann das Dämpfungsmaterial streifenförmig eingelegt sein oder als Vergußmasse mit dem jeweiligen Lagerring vergossen ein. Der Abstand zwischen Laufdrahtrücken 7 und Drahtbett 8 und damit das Dämpfungsmaterial ist im Mittelbereich 1o stärker ausgebildet als im Seitenbereich 11. Damit wird eine vergrößerte Radialtoleranz zugelassen und das Achsialspiel gering gehalten. Je nach dem Verwendungszweck des Lagers ist die Ausbildung unterschiedlich anwendbar.

Estel Hoesch Werke Aktiengesellschaft,
Eberhardstraße 12, 4600 Dortmund 1

Schutzansprüche

1. Wälzlager, bei dem ein Lagerring mit Dämpfungsmaterial
   versehen ist, dadurch gekennzeichnet, daß bei einem
   Drahtwälzlager das Dämpfungsmaterial (9) mindestens
   zwischen einem Laufdraht und einem Lagerring in einem
   vergrößerten Laufdrahtbett (8) des Lagerringes angeordnet ist.

2. Wälzlager nach Anspruch 1, dadurch gekennzeichnet, daß
   über den Querschnitt gesehen das Laufdrahtbett unterschiedlich vergrößert und das Dämpfungsmaterial unterschiedlich dick ist.

3. Wälzlager nach den Ansprüchen 1 und 2, dadurch gekennzeichnet, daß das Dämpfungsmaterial nur abschnittsweise,
   im Querschnitt und/oder am Umfang angeordnet ist.

**0071026**

Nummer der Anmeldung

EP 82 105 690.0

Europäisches
Patentamt

**EUROPÄISCHER RECHERCHENBERICHT**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| D,A | DE - U - 1 802 000 (WÜRTH) <br> -- | | F 16 C 27/06 <br><br> B 21 D 53/10 |
| A | DE - U - 7 414 644 (SKF) <br> * Ansprüche 1, 5 ; Fig. 1 * <br> -- | 1 | |
| A | US - A - 2 439 269 (SHAFER) <br> * Anspruch 1; Fig. 4, Position 24 * <br> -- | 2 | |
| A | DE - B - 1 944 839 (SOCIETE NOUVELLE DE ROULEMENTS) <br> -- | | **RECHERCHIERTE SACHGEBIETE (Int. Cl.³)** |
| A | DE - A - 1 931 073 (TEXTRON) <br> ---- | | B 21 D 53/00 <br><br> E 02 F 9/00 <br><br> F 16 C 19/00 <br><br> F 16 C 27/00 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 11-10-1982 | SCHLAITZ |

EPA form 1503.1 06.78